# Europäisches Patentamt

## European Patent Office

## Office européen des brevets

(11) Veröffentlichungsnummer: **0 182 169**
**B1**

(12) **EUROPÄISCHE PATENTSCHRIFT**

(45) Veröffentlichungstag der Patentschrift:
05.07.89

(21) Anmeldenummer: 85113945.1

(22) Anmeldetag: 02.11.85

(51) Int. Cl.⁴: **F 16 B 7/14, A 47 F 7/24,
A 47 F 7/19**

(54) **Dreh- und höhenverstellbarer Einsäulen-Präsentierständer.**

(30) Priorität: **14.11.84  CH 5450/84**

(43) Veröffentlichungstag der Anmeldung:
**28.05.86 Patentblatt 86/22**

(45) Bekanntmachung des Hinweises auf die Patenterteilung:
**05.07.89 Patentblatt 89/27**

(84) Benannte Vertragsstaaten:
**AT BE CH DE FR GB LI NL**

(56) Entgegenhaltungen:
**FR-A- 2 419 052
GB-A- 19 177
GB-A- 201 344
US-A- 1 729 004
US-A- 2 652 272**

(73) Patentinhaber: **Fehlbaum & Co., Unterdorfstrasse 21,
CH-4143 Dornach (CH)**

(72) Erfinder: **Korth, Bernd, Bühlstrasse 54, D-7858 Weil am
Rhein (DE)**

(74) Vertreter: **Gehrig, Peter et al, A. Braun, Braun, Héritier,
Eschmann AG Holbeinstrasse 36-38, CH-4051 Basel
(CH)**

## Beschreibung

Die Erfindung bezieht sich auf einen dreh- und höhenverstellbaren Einsäulen-Präsentierständer nach dem Oberbegriff des Patentanspruchs 1.

Präsentierständer dieser Art werden vorzugsweise in Verkaufslokalen für Waren aller Art, insbesondere aber für Bekleidungsstücke und dergleichen eingesetzt. Ihr Vorteil für den Käufer oder Verkäufer besteht darin, dass dieser von einem einzigen Standort aus die ganze Warenkollektion durch einfaches Drehen der Traganordnung passieren lassen und seine Wahl unter den angebotenen Waren treffen kann. Ein weiterer Vorteil besteht darin, dass solche Präsentierständer auch an Stellen eingesetzt werden können, wo der Käufer oder der Verkäufer nicht allseitig frei hingelangen kann, z.B. in Eckbereichen oder längs von Wänden, wo nur eine schmale Passage freisteht. Die Höhenverstellbarkeit ermöglicht weiterhin, den Präsentierständer für unterschiedlich lange Waren jeweils so einzustellen, dass diese optimal vorgeführt werden können.

Bei dreh- und höhenverstellbaren Einsäulen-Präsentierständern sind sowohl Stützlager- als auch Höhenarretiereinrichtungen erforderlich, die eine sichere und vorzugsweise spielarme Führung der die Traganordnung stützenden Auszugsäule im Standrohr gewährleisten. Als Stützlager werden vielfach Radial- und Axiallagereinrichtungen verwendet, die meistens eine problemlose Abstützung und Seitenführung der Auszugsäule ermöglichen. Nachteilig ist, dass dabei aufwendige Bauteile erforderlich sind, wenn sowohl ästhetische als auch betriebliche Anforderungen optimal erfüllt werden sollen. Weniger befriedigend sind bisher bekanntgewordene Höhenfixiereinrichtungen, die als an der Auszugsäule seitlich eingreifende Zapfengesperre gestaltet sind. Ein Beispiel eines solchen Zapfengesperres ist in der US-A 2 652 272, die nunmehr als nächstliegender Stand der Technik anzusehen ist, anhand einer dreh- und höhenverstellbaren Stuhlsäule für einen Einsäulenstuhl beschrieben. An der in einem Standrohr drehbaren, auf einer Radial- und Axialdrehlagereinrichtung und einer Höhenfixiervorrichtung gestützten Auszugsäule sind sowohl die Drehlager- als auch die Höhenfixiermittel dem Betrachter offen ausgesetzt. Dadurch ist zwar die Art ihrer Betätigung erkennbar gemacht, aber die offene Präsentation der Konstruktionsteile ist in ästhetischer Hinsicht mangelhaft. Ausserdem ist das gezeigte Zapfengesperre, namentlich wenn es unter Belastung betätigt wird, unfallgefährlich.

Die Erfindungsaufgabe besteht darin, einen dreh- und höhenverstellbaren Einsäulen-Präsentierständer zu schaffen, bei dem die Drehlagerelemente einesteils durch eine einfach aufgebaute und leicht montierbare Radial- und Axiallagerung der Auszugsäule, und andernteils die Höhenfixiermittel durch Anordnung eines rutschsicher sperrenden und einen Finger-Eingriff einer Bedienungsperson verunmöglichenden Kupplungselementes zwischen dem Standrohr und der Auszugsäule betriebssicher zu gestalten.

Die erfindungsgemässe Lösung dieser Aufgabe ist durch die kennzeichnenden Merkmale des Patentanspruchs 1 definiert. Ausführungsformen davon gehen aus den abhängigen Ansprüchen hervor.

Die vorgeschlagene Problemlösung ermöglicht neben einer rationellen Gestaltung der Bauteile nicht nur eine einfache Montage der Einzelteile am Aufstellungsort des Gestelles und leichte Handhabung durch wenig geübte Personen, sondern auch eine ästhetisch ansprechende Gestaltung der von aussen sichtbaren Teile der Drehlagerung und der Höhenfixiereinrichtung.

Die Erfindung ist nachstehend anhand der Zeichnung beispielsweise erläutert. Darin zeigt:

Fig. 1 ein Ausführungsbeispiel eines dreh- und höhenverstellbaren Einsäulen-Präsentierständers in perspektivischer Darstellungsform,

Fig. 2 in grösserem Massstab und in teilweise geschnittener Seitenansicht die Radial- und Axiallagerung der Auszugsäule und deren Höhenfixiereinrichtung,

Fig. 3 einen Schnitt nach der Linie III–III in Fig. 2, und

Fig. 4 einen Schnitt nach der Linie IV–IV in Fig. 3.

In den Figuren bezeichnen gleiche Referenznummern gleiche Bauteile.

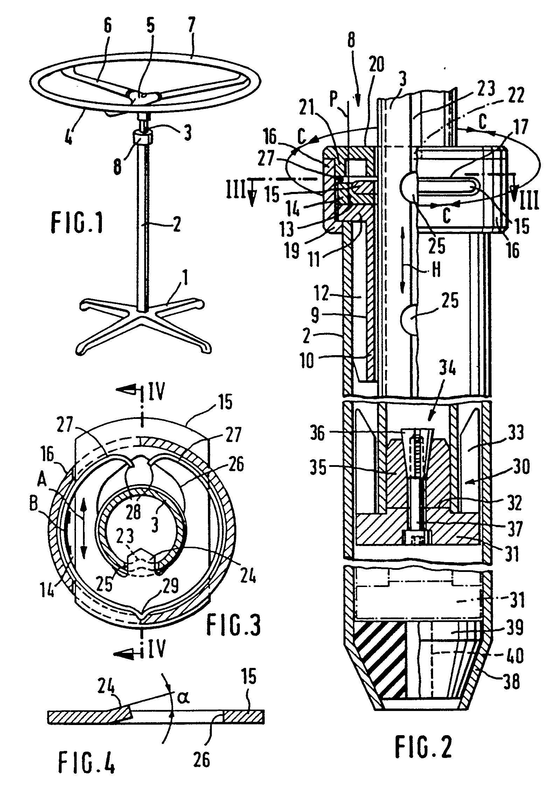

Wie die Fig. 1 zeigt, enthalten erfindungsgemässe Präsentierständer einen Tragfuss 1, ein im Tragfuss 1 festsitzend eingesetztes Standrohr 2, eine im Standrohr 2 drehbar angeordnete Auszugsäule 3 und eine auf dieser aufgebaute Traganordnung 4. Letztere kann wie gezeigt ein von einer zentralen Nabe 5 über Speichen 6 gestützter Tragring 7 sein. Zwischen Standrohr 2 und darin dreh- und höhenverstellbar gehalterter Auszugsäule 3 ist eine Lageranordnung 8 vorhanden, die nachstehend anhand der Fig. 2, 3 und 4 prinzipiell beschrieben ist.

Die Lageranordnung 8 umfasst ein im Standrohr 2 aufgekeiltes oberes Führungsglied 9 mit einer radial inneren Führungshülse 10 für die zentrische Halterung der Auszugsäule 3 und einem obenliegenden ringförmigen Stützflansch 11, dessen Unterseite auf dem oberen Ende des Standrohres 2 aufliegt. Die Verkeilung des oberen Führungsgliedes 9 im Innern des Standrohres 2 erfolgt mittels an der Führungshülse 10 radial auswärts gerichteter Rippen 12. Die Oberseite des Stützflansches 11 ist als ringförmige Auflagefläche 13 für einen Lagerring 14 gestaltet, der über einen nachstehend beschriebenen Höhenindexierschieber 15 die Auszugsäule 3 auf dem Standrohr 2 drehbar abstützt. Der Höhenindexierschieber 15, nachstehend vereinfacht Schieber 15 genannt, sitzt weiterhin in einem Schiebergehäuse 16, das mit seitlichen Durchlassöffnungen 17 für den Schieber 15 versehen ist. Das Schiebergehäuse 16 besitzt etwa rohrförmige Gestalt und ist mit einem untenliegenden einwärts orientierten Basisflansch 19 versehen, der in der Art einer Ringschulter die Unterseite des Stützflansches 11 am oberen Führungsglied 9 untergreift. Die Lageranordnung 8 ist oben durch einen Deckring 20, der über eine Ringrippe 21 drehfest am Schiebergehäuse 16 verankert ist, abgeschlossen. Er trägt weiterhin eine Mitnehmernase 22, die in eine Mitnehmernut 23 auf der Aussenseite der Auszugsäule 3 eingreift und damit ein Drehkupplungsglied zwischen dem Schiebergehäuse 16 und der Auszugsäule 3 bildet.

Zur Erläuterung der Beziehung zwischen den Fig. 2 und 3 diene, dass einerseits der in Pfeilrichtung A im Schiebergehäuse 16 verschiebbare Schieber 15 eine Einrastzunge 24 und die Auszugsäule 3 längs einer axial orientierten Teilungslinie auf der Säulenoberfläche mit Rastdurchbrechungen 25 versehen ist. Auf die genannte Teilungslinie ausgerichtet ist auch die oben erwähnte Mitnehmernut 23 in der Auszugsäule 3, in welche die Mitnehmernase 22 am Deckring 20 eingreift.

Fig. 3 zeigt im Schnitt nach der Linie III–III in Fig. 2 den Schieber 15 in der Stellung, wo seine Einrastzunge 24 eine Rastdurchbrechung 25 der Auszugsäule 3 durchgreift und dadurch eine der möglichen Höhenstellungen der Auszugsäule 3 festlegt. Der Schieber 15, von dem Fig. 4 einen Schnitt nach der Linie IV–IV in Fig. 3 zeigt, enthält eine längliche Mittendurchbrechung 26, in die die Einrastzunge 24 eingeformt ist bzw. hineinragt, und durch die hindurch sich die Auszugsäule 3 erstreckt. Ein mit parallelen Wänden begrenzter Mittelteil der Durchbrechung 26 ist mindestens so lange, dass eine Schieberbewegung zwischen der gezeigten Einraststellung der Zunge 24 in einer Rastdurchbrechung 25 und einer Ausraststellung möglich ist, in welcher die Zunge 24 ausserhalb der Peripherie der Säule 3 bzw. einer Rastdurchbrechung 25 liegt. In letzterem Fall ist die Auszugsäule 3 bezüglich dem Standrohr 2 frei im Standrohr 2 teleskopierend beweglich; sie kann nun auf die gewünschte Höhenstellung gebracht werden. Mit 14 ist der im Schnitt III–III sichtbare Teil des mit der Auszugsäule 3 mitdrehbaren Lagerringes 14 (Pfeil B) bezeichnet.

Damit der Schieber 15 im unbetätigten Zustand sicher in einer Rastdurchbrechung 25 der Auszugsäule 3 verharrt, sind zwei Massnahmen getroffen: Erstens ist die Zunge 24 unter einen Winkel α von etwa 5–15° aufwärts gebogen, wodurch sich eine Selbstsperre unter dem Gewicht der Auszugsäulenlast ergibt, und zweitens ist im Schiebergehäuse 16 eine rundgebogene Rückholfeder 27 mit einem Paar abgekröpfter Schenkelenden 28 untergebracht. Letztere greifen so an V-förmig symmetrisch zueinanderstehender Flächenabschnitten der Durchbrechung 26 ein, dass der Schieber 15 in Richtung Einraststellung vorgespannt ist. Damit sich die Rückholfeder 27 im Gehäuse 16 nicht drehen und damit ein Verkanten der Schenkelenden 28 stattfinden kann, ist sie mit einer Sperrnase 29 versehen, die in die Innenwand des Schiebergehäuses 16 eingerastet ist.

Somit ergibt sich auch bei einer Auflagerbelastung Pfeil P und eingerastetem Schieber 15 eine gesicherte freie Rundumbeweglichkeit der Traganordnung 4 (Fig. 1) in Richtung der Pfeile C, C; und ferner bei ausgerastetem Schieber 15 und entlasteter Lageranordnung 8 eine Auszugsäulenbewegung nach dem Pfeil H.

Zurück zur Fig. 2: die obere zentrische Halterung der Auszugsäule 3 ist durch das zur Lageranordnung 8 gehörende obere Führungsglied 9 bzw. die in das obere Ende des Standrohres 2 eingekeilte Führungshülse 10 gegeben. Zur Sicherstellung der Achsfluchtung von Standrohr 2 und Auszugsäule 3 und damit eines ansprechenden Aussehens des Präsentierständers ist am unteren Ende der Auszugsäule 3 ein unteres Führungsglied 30 angebracht. Dieses besteht im wesentlichen aus einer Grundplatte 31 mit einer daran obenliegenden am unteren Ende der Auszugsäule 3 zentrierend eingreifenden Erhebung 32, auf der Grundplatte nach oben abstehende radiale Zentrierflügel 33, die vorzugsweise in leicht federnder Anlage auf der Standrohr-Innenwand liegen, und eine insgesamt mit 34 bezeichnete Konusklemmeinrichtung, welche das untere Führungsglied 30 am unteren Ende der Auszugsäule 3 festhält. Die Konusklemmeinrichtung aus einem Klemmblock 35, einem Konusspreizglied 36 und einer Klemmschraube 37 ermöglicht, die Auszugsäule 3 erst nach vollständiger Montage der Lageranordnung 8 in das Standrohr 2 einsetzen zu müssen. Das untere Führungsglied 30 dient weiterhin auch als oberer Auszugsbegrenzer für die Auszugsäule 3.

Zur Begrenzung der Vertikalbewegung der Auszugsäule 3 nach unten zeigt der unterste Abschnitt der Fig. 2 eine einfache und billig herstellbare Anordnung. Am unteren Ende des Standrohres 2 ist ein Abschnitt 38 derart konisch verengt, dass ein Pufferkörper 39 aus elastischem Material gefangen gehalten werden kann. Der Pufferkörper 39 ist zweckmässig mit einer Längsbohrung 40 versehen, durch die ein Inbusschlüssel oder ein Schraubenzieher zur Betätigung der Klemmschraube 37 einführbar ist.

**Patentansprüche**

1. Dreh- und höhenverstellbarer Einsäulen-Präsentierständer mit einem Standrohr (2), einer im Standrohr (2) drehbaren, auf einer Radial- und Axialdrehlagereinrichtung (11, 14) und einer Höhenfixiervorrichtung (15, 26, 27) gestützten Auszugsäule (3), und einer die Auszugsäule (3) im Standrohr (2) zentrierenden Führungseinrichtung (9, 30), wobei die Drehlagereinrichtung (11, 14) und die Höhenfixiervorrichtung aus einem auf dem oberen Ende des Standrohres (2) angeordneten Stützflansch (11) mit ringförmiger Tragfläche (13), und einem die Auszugsäule (3) über ein lösbares Kupplungselement (15) auf dem Stützflansch (11) abstützenden Lagerring (14) besteht, dadurch gekennzeichnet, dass das Kupplungselement (15), der Stützflansch (11), der Lagerring (14) und das obere Ende des Standrohrs (2) im Innern eines diese Teile mantelartig umgebenden Gehäuses (16) angeordnet ist, dass das Kupplungselement (15) mittels über das Gehäuse (16) ausschiebbaren Abschnitten davon in und ausser Eingriff mit der Auszugsäule (3) schaltbar ist, und ferner ein mit dem Gehäuse (16) verbundener Ringflansch (19) derart mit dem Stützflansch (11) in Eingriff steht, dass bei in Eingriff stehendem Kupplungselement (15) eine formschlüssige Verbindung zwischen Standrohr (2) und Auszugsäule (3) besteht.

2. Einsäulen-Präsentierständer nach Anspruch 1, dadurch gekennzeichnet, dass das lösbare Kupplungselement ein in diametral in der Umfassungswand des Gehäuses (16) vorhandenen Durchlassöffnungen (17) gelagerter Höhenindexierungsschieber (15) mit einer zentralen Durchbrechung (26) für den Durchtritt der Auszugsäule (3) ist.

3. Einsäulen-Präsentierständer nach Anspruch 2, dadurch gekennzeichnet, dass der Höhenindexierungsschieber (15) eine in dessen zentrale Durchbrechung (26) ragende Einrastzunge (24) aufweist, die in eine ausgewählte Rastdurchbrechung (26) an der Auszugsäule (3) in Eingriff bringbar ist.

4. Einsäulen-Präsentierständer nach Anspruch 1, dadurch gekennzeichnet, dass die Führungseinrichtung aus einem oberen (9) und einem unteren Führungsglied (30) besteht, dass das obere Führungsglied (9) einstückig mit dem Stützflansch (11) der Drehlagereinrichtung verbunden ist, und dass das untere Führungsglied (30) mittels einer in das untere Ende der Auszugsäule (3) eingreifenden Konusklemmverbindung (34) mit der Auszugsäule (3) verbunden ist.

5. Einsäulen-Präsentierständer nach Anspruch 4, dadurch gekennzeichnet, dass das obere Führungsglied (9) eine mittels radial auswärts orientierten Rippen (12) im Standrohr (2) zentrierte Führungshülse (10) ist, und dass die Rippen (12) einstückig mit der Führungshülse verbunden sind.

6. Einsäulen-Präsentierständer nach Anspruch 4, dadurch gekennzeichnet, dass das untere Führungsglied (30) eine das untere Ende der Auszugsäule (3) stützende Grundplatte (31) ist, an der radial orientierte, axiallaufende Zentrierflügel (33) angeformt sind, welche unter leichtem Federandruck an der Innenwand des Standrohres (2) anliegen.

7. Einsäulen-Präsentierständer nach Anspruch 3, dadurch gekennzeichnet, dass der Höhenindexierungsschieber (15) durch eine im Gehäuse (16) gelagerte Rückholfeder (27) in Einrastrichtung vorgespannt ist.

8. Einsäulen-Präsentierständer nach Anspruch 3, dadurch gekennzeichnet, dass die Einrastzunge (24) in Aufwärtsrichtung (α) aus der Schieberebene ausgebogen ist (Fig. 4).

**Claims**

1. Rotatable and height-adjustable single-column show stand with a vertical tube (2), an extension column (3) supported on a radial and axial pivot-bearing device (11, 14) and a height-fixing device (15, 26, 27) and a guide device (9, 30) which centres the extension column (3) in the vertical tube (2) the pivot-bearing device (11, 14) and the height-fixing device consisting of a supporting flange (11) located on the upper end of the vertical tube (2) and having an annular supporting surface (13) and of a bearing ring (14) supporting the extension column (3) on the supporting flange (11) via a detachable coupling element (15) characterized by the fact that the coupling element (15) the supporting flange (11) the bearing ring (14) and the upper end of the vertical tube (2) are situated in the interior of a housing (16) surrounding these parts in the manner of a jacket, that the coupling element (15) can be engaged in and disengaged from the extension column (3) by means of sections thereof extensible over the housing (16) in addition to which an annular flange (19) connected with the housing (16) is engaged with the supporting flange (11) in such a way that when the coupling element (15) is engaged there is an interlocking connection between the vertical tube (2) and the extension column (3).

2. Single-column show stand in accordance with Claim 1, characterized by the fact that the detachable coupling element consists of a height-indexing slide (15) which is mounted in passages (17) provided diametrically in the surrounding wall of the housing (16) and which has a central perforation (26) to give passage to the extension column (3).

3. Single-column show stand in accordance with Claim 2, characterized by the fact that the height-indexing slide (15) has a latch (24) which can be caused to engage a selected detent perforation (26) on the extension column (3).

4. Single-column show stand in accordance with Claim 1, characterized by the fact that the guide device consists of an upper guide member (9) and a lower guide member (30) that the upper guide member (9) is connected in one piece with the supporting flange (11) of the pivot-bearing device and that the lower guide member (30) is connected with the extension column (3) by means of a conical clamp connection engaging the lower end of the said extension column (3).

5. Single-column show stand in accordance with Claim 4, characterized by the fact that the upper guide member (9) consists of a guide sleeve (10) centred in the vertical tube (2) by means of ribs (12) orientated radially outwards and that the ribs (12) are connected with the guide sleeve in one piece.

6. Single-column show stand in accordance with Claim 4, characterized by the fact that the lower guide member (30) consists of a baseplate (31) which supports the lower end of the extension column (3) and onto which are shaped radially orientated centering fins (33) which take an axial course and which rest with a slight spring pressure against the inner wall of the vertical tube (2).

7. Single-column show stand in accordance with Claim 3, characterized by the fact that the height-indexing slide (15) is prestressed in the detent direction by a restoring spring (27) mounted in the housing (16).

8. Single-column show stand in accordance with Claim 3, characterized by the fact that the latch (24), in the upward direction (a), is bent out of the plane of the slide (Fig. 4).

## Revendications

1. Présentoir à colonne unique, tournant, réglable en hauteur et comprenant un montant tubulaire (2), une colonne télescopique (3) qui peut tourner dans ce montant tubulaire (2) et prend appui sur un dispositif de consignation en hauteur (15, 26, 27) et sur un dispositif de montage rotatif radial et axial (11, 14), ainsi qu'un dispositif de guidage (9, 30) qui centre la colonne télescopique (3) dans le montant tubulaire (2), le dispositif de montage rotatif (11, 14) et le dispositif de consignation en hauteur consistant en une collerette de soutien (11) à surface annulaire d'appui (13), disposée sur l'extrémité supérieure du montant tubulaire (2), et en une bague de montage (14) assurant le soutien de la colonne télescopique (3) sur la collerette de soutien (11), par l'intermédiaire d'un élément d'accouplement libérable (15), caractérisé par le fait que l'élément d'accouplement (15), la collerette de soutien (11), la bague de montage (14) et l'extrémité supérieure du montant tubulaire (2) sont logés dans l'espace interne d'un boîtier (16) entourant ces pièces à la manière d'une enveloppe; par le fait que l'élément d'accouplement (15) peut être sélectivement mis en et hors prise avec la colonne télescopique (3), au moyen de tronçons de cet élément pouvant être déployés par l'intermédiaire du boîtier (16); et par le fait que, en outre, une aile annulaire (19) reliée au boîtier (16) est en prise avec la collerette de soutien (11), de telle sorte qu'une solidarisation par concordance de formes soit établie, entre le montant tubulaire (2) et la colonne télescopique (3), lorsque l'élément d'accouplement (15) est en prise.

2. Présentoir à colonne unique, selon la revendication 1, caractérisé par le fait que l'élément d'accouplement libérable est une coulisse (15) de consignation en hauteur, logée dans des orifices de passage (17) ménagés diamétralement dans la paroi périphérique du boîtier (16), et percée d'un évidement central (26) autorisant le passage de la colonne télescopique (3).

3. Présentoir à colonne unique, selon la revendication 2, caractérisé par le fait que la coulisse (15) de consignation en hauteur présente une languette encliquetable (24) qui dépasse dans l'évidement central (26) de cette coulisse, et peut être mise en prise dans une perforation d'encliquetage sélectionnée (26), patiquée sur la colonne télescopique (3).

4. Présentoir à colonne unique, selon la revendication 1, caractérisé par le fait que le dispositif de guidage se compose d'une pièce supérieure de guidage (9) et d'une pièce inférieure de guidage (30); par le fait que la pièce supérieure de guidage (9) est reliée d'un seul tenant à la collerette de soutien (11) du dispositif de montage rotatif; et par le fait que la pièce inférieure de guidage (30) est reliée à la colonne télescopique (3) au moyen d'un dispositif (34) de coincement par cône, s'engageant dans l'extrémité inférieure de la colonne télescopique (3).

5. Présentoir à colonne unique, selon la revendication 4, caractérisé par le fait que la pièce supérieure de guidage (9) est une douille de guidage (10) centrée, dans le montant tubulaire (2), au moyen de nervures (12) orientées radialement vers l'extérieur; et par le fait que les nervures (12) sont reliées d'un seul tenant à la douille de guidage.

6. Présentoir à colonne unique, selon la revendication 4, caractérisé par le fait que la pièce inférieure de guidage (30) est une plaque de base (31) soutenant l'extrémité inférieure de la colonne télescopique (3), et sur laquelle sont ménagées solidairement des ailes de centrage (33) qui s'étendent axialement, sont orientées radialement et sont appliquées, sous une légère pression élastique, contre la paroi intérieure du montant tubulaire (2).

7. Présentoir à colonne unique, selon la revendication 3, caractérisé par le fait que la coulisse (15) de consignation en hauteur est préchargée, dans la direction d'encliquetage, par l'intermédiaire d'un ressort de rappel (27) monté dans le boîtier (16).

8. Présentoir à colonne unique, selon la revendication 3, caractérisé par le fait que la languette encliquetable (24) est cintrée, dans la direction ascendante (α), hors du plan de la coulisse (figure 4).

FIG.1

FIG.3

FIG.4

FIG.2